# EUROPEAN PATENT APPLICATION

(11) **EP 4 163 328 A1**
(43) Date of publication of application: **12.04.2023**
(21) Application number: 22200037.4
(22) Date of filing: 06.10.2022
(51) Int. Cl.: C08K 5/353, C08L 25/14, C08L 67/00, C08J 5/10, D04H 1/60, C08K 3/26, C08K 5/00, C08K 3/36

(54) **BINDING MATERIAL AND METHOD FOR MANUFACTURING MOLDED BODY**

(30) Priority: 08.10.2021 JP 2021165959
(71) Applicant: Seiko Epson Corporation, Tokyo 160-8801 (JP)
(72) Inventor: SAGO, Takumi, Suwa-shi, 392-8502 (JP); NAKAZAWA, Masahiko, Suwa-shi, 392-8502 (JP)
(74) Representative: Miller Sturt Kenyon

(57) **Abstract**

A binding material to obtain a molded body by binding fibers to each other, includes a thermoplastic resin and a fluorescent whitener, and the fluorescent whitener has a melting point higher than a fusing point of the thermoplastic resin. The melting point of the fluorescent whitener is preferably 200°C or more. A content of the fluorescent whitener in the binding material is preferably 1.0 percent by mass or less. The binding material preferably further includes a white pigment.

## Description

The present application is based on, and claims priority from JP Application Serial Number 2021-165959, filed October 8, 2021, the disclosure of which is hereby incorporated by reference herein in its entirety.

### BACKGROUND

### 1. Technical Field

The present disclosure relates to a binding material and a method for manufacturing a molded body.

### 2. Related Art

To obtain a sheet-shaped molded body by applying a binding force between deposited fibers has been carried out in the past. As a typical example thereof, manufacturing of paper by papermaking using water may be mentioned. An apparatus used for the papermaking requires large-scale utilities, such as water, electric power, and drainage facilities, in many cases, and hence, it is difficult to reduce the size of the apparatus including its facilities. Accordingly, as a method for manufacturing sheets instead of the papermaking method, a method which uses no water or almost no water, that is, a so-called dry method, has been expected.

When sheets are formed by a dry method, JP-A-2015-092032 has disclosed the use of a composite containing a colorant and a resin to bind fibers functioning as a constituent component of the sheet.

However, when sheets are manufactured using a dry method as described above, heating at a high temperature is required to melt the resin, and as a result, a sheet having a desired color could not be obtained in some cases by this heating.

### SUMMARY

The present disclosure was made to solve the problem described above and can be realized as the following application examples.

A binding material according to an application example of the present disclosure to obtain a molded body by binding fibers to each other, comprises a thermoplastic resin and a fluorescent whitener, and the fluorescent whitener has a melting point higher than a fusing point of the thermoplastic resin.

In addition, a method for manufacturing a molded body according to another application example of the present disclosure, comprises: a mixing step of mixing the binding material according to the above application example of the present disclosure and fibers in a vapor phase to obtain a mixture; and a molding step of pressurizing and heating the mixture to obtain the molded body.

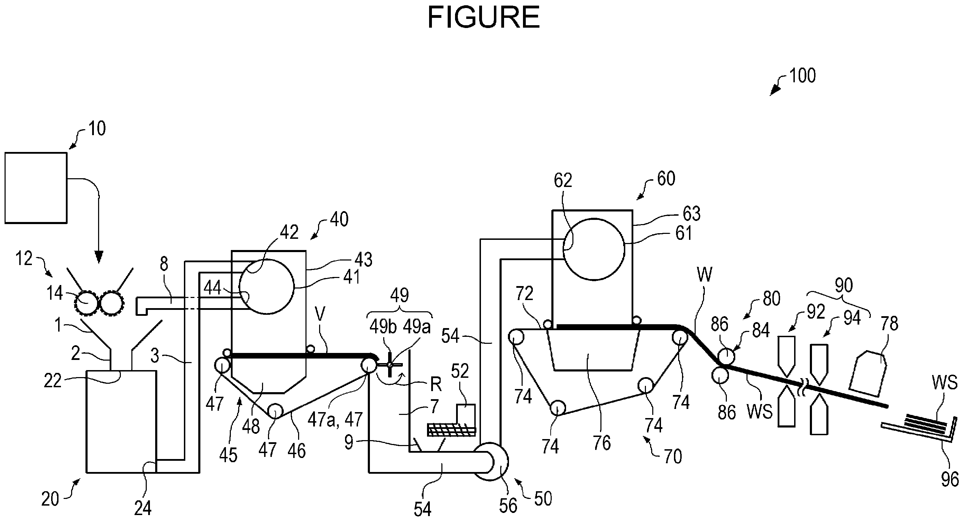

### BRIEF DESCRIPTION OF THE DRAWING

FIGURE is a schematic view showing one example of a manufacturing apparatus capable of manufacturing a sheet-shaped molded body.

### DESCRIPTION OF EXEMPLARY EMBODIMENTS

Hereinafter, preferable embodiments of the present disclosure will be described in detail.

### 1. Binding Material

First, a binding material of the present disclosure will be described.

The binding material of the present disclosure is used to obtain a molded body by binding fibers to each other.

In addition, the binding material of the present disclosure includes a thermoplastic resin and a fluorescent whitener, and the fluorescent whitener has a melting point higher than a fusing point of the thermoplastic resin.

According to the structure as described above, a binding material which can be preferably applied to manufacturing of a molded body having a high whiteness degree by a dry method can be provided. In addition, even when a heating temperature at which a molded body is formed is relatively high, the whiteness degree of a molded body to be obtained can be effectively prevented from being degraded. Accordingly, since the resin can be sufficiently melted and softened, a strength of the molded body to be obtained can be made sufficiently excellent, and in addition, the shape, surface condition, and the like of the molded body can also be preferably controlled.

In addition, in the present disclosure, the fusing point indicates a T1/2 temperature measured by a flow tester. The fusing point can be obtained by measurement performed under conditions in which a load, a temperature-rise rate, a die diameter, and a die length are set to 20 kg/cm², 5.0 °C/min, 1.0 mm, and 1.0 mm, respectively. In addition, in the measurement of the fusing point, an elevated flow tester may be used. As the elevated flow tester, for example, a CFT500 type manufactured by Shimadzu Corporation may be mentioned.

In addition, in the present disclosure, the "dry method" indicates a method which uses no water or almost no water. In more particular, the "dry method" indicates a method in which the binding material and the fibers are mixed not in water but in a vapor phase.

### 1-1. Thermoplastic Resin

The binding material of the present disclosure includes a thermoplastic resin. The thermoplastic resin has a function to primarily increase a binding force between fibers in a molded body to be manufactured using the binding material of the present disclosure.

As the thermoplastic resin, for example, there may be mentioned an AS resin, an ABS resin, a polypropylene, a polyethylene, a poly(vinyl chloride), a polystyrene, an acrylic resin, a polyester resin, a poly(ethylene terephthalate), a poly(phenylene ether), a poly(butylene terephthalate), a nylon, a polyamide, a polycarbonate, a polyacetal, a poly(phenylene sulfide), or a poly(ether ether ketone); a biodegradable resin, such as a polylactic acid, a polybutylene succinate, or a polyhydroxy butyrate; or a copolymer or a modified compound of at least one of those mentioned above. Among those resins mentioned above, although at least one may be used alone, or at least two types thereof may be used in combination, in particular, a polyester resin is preferable.

Accordingly, the strength of the molded body to be manufactured using the binding material of the present disclosure can be made more excellent.

When the binding material of the present disclosure includes at least two types of components as the thermoplastic resin, a rate of the polyester resin occupied in the total thermoplastic resin is preferably 50 percent by mass or more, more preferably 80 percent by mass or more, and further preferably 90 percent by mass or more.

Accordingly, the effects described above can be more significantly obtained.

The fusing point of the thermoplastic resin is preferably 70°C to 150°C, more preferably 80°C to 140°C, and further preferably 85°C to 130°C.

Accordingly, for example, while a high melting point fluorescent whitener is prevented from being melted in manufacturing of the molded body, the binding material of the present disclosure can be more preferably melted and softened, and for example, the moldability, productivity, and strength of the molded body can be made more excellent.

A content of the thermoplastic resin in the binding material of the present disclosure is preferably 75.0 to 98.0 percent by mass, more preferably 80.0 to 95.0 percent by mass, and further preferably 85.0 to 92.0 percent by mass.

Accordingly, while the whiteness degree of the molded body to be manufactured using the binding material of the present disclosure is made sufficiently excellent, the strength of the molded body can be made more excellent.

### 1-2. High Melting Point Fluorescent Whitener

The binding material of the present disclosure includes a fluorescent whitener having a melting point higher than the fusing point of the thermoplastic resin. In the following description, the fluorescent whitener as described above is also called "high melting point fluorescent whitener" in some cases.

The high melting point fluorescent whitener primarily functions to increase the whiteness degree of the molded body to be manufactured using the binding material of the present disclosure. In particular, when a high melting point fluorescent whitener having a melting point higher than the fusing point of the thermoplastic resin is used as the fluorescent whitener, for example, the fluorescent whitener can be more preferably prevented from being melted by heating performed in the manufacturing of the molded body. As a result, the fluorescent whitener can be maintained in a preferable dispersion state even in the molded body, and the whiteness degree of the molded body can be made excellent.

Although the melting point of the high melting point fluorescent whitener may be higher than the fusing point of the thermoplastic resin, the melting point described above is preferably 200°C or more, more preferably 250°C to 450°C, and further preferably 280°C to 400°C.

Accordingly, the dispersion state of the fluorescent whitener in the molded body to be manufactured using the binding material of the present disclosure can be made more preferable, and the effects of the present disclosure as described above can be more significantly obtained.

When the fusing point of the thermoplastic resin and the melting point of the high melting point fluorescent whitener are represented by T1 [°C] and T2 [°C], respectively, 70≤T2-T1≤350 is preferably satisfied, 110≤T2-T1≤330 is more preferably satisfied, and 150≤T2-T1≤300 is further preferably satisfied.

Accordingly, the effects described above can be more significantly obtained. In addition, for example, a temperature control in the manufacturing of the molded body can be easily performed.

As the high melting point fluorescent whitener, for example, there may be mentioned 1,4-bis(2-benzoxazolyl)naphthalene (melting point: 212°C), 4,4'-bis(2-benzoxazolyl)stilbene (melting point: 355°C), 2,5-bis(5-tert-butyl-2-benzoxazolyl)thiophene (melting point: 201°C), 4-(2-benzoxazolyl)-4'-(5-methyl-2- benzoxazolyl)stilbene (melting point: 292°C), 7-(2H-naphthalene[1,2-D]triazole-2-yl)-3-phenyl-2H-1-benzpyrane-2-one (melting point: 250°C), or 1,1'-biphenyl-4,4'bis-benzoxazole (melting point: 220°C), and although one of those mentioned above may be used alone, or at least two types thereof may be used in combination, in particular, 4,4'-bis(2-benzoxazolyl)stilbene is preferable.

Accordingly, the effects as described above can be more significantly obtained.

When the binding material of the present disclosure includes at least two types of components as the high melting point fluorescent whitener, a rate of 4,4'-bis(2-benzoxazolyl)stilbene occupied in the total high melting point fluorescent whitener is preferably 50 percent by mass or more, more preferably 80 percent by mass or more, and further preferably 90 percent by mass or more.

Accordingly, the effects as described above can be more significantly obtained.

A content of the high melting point fluorescent whitener in the binding material of the present disclosure is preferably 1.0 percent by mass or less, more preferably 0.01 to 0.8 percent by mass, and furthermore preferably 0.03 to 0.5 percent by mass.

Accordingly, concentration quenching and a color tone of the high melting point fluorescent whitener itself are effectively prevented from imparting an adverse influence on the whiteness degree of the molded body, and hence, the whiteness degree of the molded body to be manufactured using the binding material of the present disclosure can be made more excellent.

When the content of the thermoplastic resin and the content of the high melting point fluorescent whitener in the binding material of the present disclosure are represented by X1 [percent by mass] and X2 [percent by mass], respectively, 0.00010≤X2/X1≤0.013 is preferably satisfied, 0.00011≤X2/X1≤0.010 is more preferably satisfied, and 0.00030≤X2/X1≤0.0060 is further preferably satisfied.

Accordingly, the whiteness degree and the strength of the molded body to be manufactured using the binding material of the present disclosure can be simultaneously obtained at a higher level.

Although the high melting point fluorescent whitener may be included in the binding material of the present disclosure so as to be separated from the thermoplastic resin, the high melting point fluorescent whitener is preferably included in particles containing the thermoplastic resin in a dispersion state.

Accordingly, the whiteness degree of the molded body to be manufactured using the binding material of the present disclosure can be made more excellent.

### 1-3. White Pigment

Besides the thermoplastic resin and the high melting point fluorescent whitener described above, the binding material of the present disclosure may further include a white pigment.

Accordingly, the whiteness degree of the molded body to be manufactured using the binding material of the present disclosure can be made more excellent.

As the white pigment, for example, titanium oxide, calcium carbonate, aluminum oxide, zinc oxide, cerium oxide, magnesium oxide, zirconium oxide, strontium titanate, or barium titanate may be mentioned, and at least one selected from those mentioned above may be used alone, or at least two types thereof may be used in combination.

Among those mentioned above, as the white pigment, calcium carbonate is preferably contained. Accordingly, the whiteness degree of the molded body to be manufactured using the binding material of the present disclosure can be made more excellent. In addition, for example, a kneading property with the thermoplastic resin in manufacturing of the binding material can be made more excellent, and a binding material in which the white pigment is more preferably dispersed in the thermoplastic resin can be obtained. In addition, since a specific gravity of the binding material can be made relatively low, in a manufacturing apparatus as described later, the binding material can be more preferably supplied. In addition, since calcium carbonate is decomposed by heating at a high temperature, and carbon dioxide is released, flame retardancy of the molded body can also be preferably improved. In addition, the specific gravity of the molded body can be more effectively prevented from being unnecessarily increased. In addition, among various types of white pigments, since calcium carbonate can be stably available at an inexpensive price, calcium carbonate is preferable in terms of reduction in production costs of the binding material and the molded body and also in terms of stable supply of the binding material and the molded body.

An average particle diameter of the white pigment is preferably 0.01 to 10 µm, more preferably 0.02 to 1 µm, and further preferably 0.03 to 0.5 µm. Accordingly, the whiteness degree of the molded body to be manufactured using the binding material of the present disclosure can be made more excellent.

When the binding material of the present disclosure includes at least two types of components as the white pigment, a rate of calcium carbonate occupied in the total white pigment is preferably 50 percent by mass or more, more preferably 80 percent by mass or more, and further preferably 90 percent by mass or more.

Accordingly, the effects described above can be more significantly obtained.

A content of the white pigment in the binding material of the present disclosure is preferably less than 20.0 percent by mass, more preferably 3.0 to 18.0 percent by mass, and further preferably 5.0 to 15.0 percent by mass.

Accordingly, while the whiteness degree of the molded body to be manufactured using the binding material of the present disclosure can be made more excellent, the strength of the molded body can also be made more excellent.

In the binding material of the present disclosure, when the content of the high melting point fluorescent whitener and the content of the white pigment are represented by X2 [percent by mass] and X3 [percent by mass], respectively, 0.00050≤X2/X3≤1.0 is preferably satisfied, 0.00060≤X2/X3≤0.026 is more preferably satisfied, and 0.0020≤X2/X3≤0.10 is further preferably satisfied.

Accordingly, the whiteness degree of the molded body to be manufactured using the binding material of the present disclosure can be made more excellent.

In the binding material of the present disclosure, although the white pigment may be included separately from the thermoplastic resin, the white pigment is preferably contained in the particles containing the thermoplastic resin in a dispersion state.

Accordingly, the whiteness degree of the molded body to be manufactured using the binding material of the present disclosure can be made more excellent.

### 1-4. Aggregation Suppressor

As at least one component other than those mentioned above, for example, the binding material of the present disclosure may further include an aggregation suppressor.

Accordingly, for example, in the binding material of the present disclosure, the particles containing the thermoplastic resin can be effectively prevented from being aggregated, and the thermoplastic resin in the molded body to be manufactured using the binding material of the present disclosure can be preferably prevented from being unfavorably localized. As a result, for example, the strength of the molded body can be made more excellent. In addition, also in the molded body to be manufactured using the binding material of the present disclosure, for example, the high melting point fluorescent whitener and the white pigment can be prevented from being unfavorably aggregated. As a result, generation of unfavorable color irregularity in the molded body can be more preferably prevented.

As the aggregation suppressor, besides fumed silica, among the materials described above to be used as the white pigment, for example, a material having an average particle diameter smaller than that of the particles to be used as the white pigment, that is, nanoparticles having an average particle diameter of 0.001 to 0.5 µm and more preferably 0.005 to 0.05 µm, may be mentioned. As described above, since an aggregation suppressor having an average particle diameter smaller than that of the white pigment is used, the aggregation of the particles containing the thermoplastic resin can be effectively prevented.

A content of the aggregation suppressor in the binding material of the present disclosure is preferably 0.10 to 3.0 percent by mass, more preferably 0.20 to 2.0 percent by mass, and further preferably 0.30 to 1.5 percent by mass.

### 1-5. Other Component(s)

The binding material of the present disclosure may further include at least one component other than those described above. Hereinafter, in this section, the component as described above is also called "other component(s)" in some cases.

As the other component(s), for example, there may be mentioned a frame retardant, a colorant, a surfactant, a fungicide, an antiseptic agent, an antioxidant, an UV absorber, an oxygen absorber, a resin other than the thermoplastic resin described above, a fluorescent whitener other than the high melting point fluorescent whitener, fibers, a releasing agent, a resin modifier, and/or a pigment dispersant.

In addition, a content of the other component(s) in the binding material of the present disclosure is preferably 7.0 percent by mass or less, more preferably 5.0 percent by mass or less, and further preferably 3.0 percent by mass or less.

In particular, when the binding material of the present disclosure includes a fluorescent whitener other than the high melting point fluorescent whitener, a content of the fluorescent whitener other than the high melting point fluorescent whitener is preferably 0.2 percent by mass or less, more preferably 0.1 percent by mass or less, and further preferably 0.01 percent by mass or less.

### 1-6. Other Conditions

Although the shape of the binding material of the present disclosure is not particularly limited, the binding material described above is preferably in the form of powder.

Accordingly, since handling of the binding material can be easily performed, and the binding material and the fibers can be more uniformly mixed together in the manufacturing of the molded body, for example, reliability of the molded body to be manufactured can be made more excellent.

When the binding material of the present disclosure is in the form of powder, an average particle diameter of the particles forming the binding material of the present disclosure is preferably 0.5 to 100.0 µm, more preferably 1.0 to 50.0 µm, and further preferably 2.0 to 30.0 µm.

Accordingly, the effects described above can be more significantly obtained.

In addition, in this specification, the average particle diameter indicates a volume-basis average particle diameter. The average particle diameter can be measured by a particle size distribution measurement device, such as a LA910 manufactured by HORIBA, Ltd., using a laser diffraction/scattering method as a measurement principle, that is, by a laser diffraction type particle size measurement device.

### 2. Method for Manufacturing Binding Material

The binding material of the present disclosure can be more preferably manufactured by a method including a kneading step of kneading a material containing a thermoplastic resin and a high melting point fluorescent whitener to form a kneaded material and a pulverizing step of pulverizing the kneaded material.

The material to be processed in the kneading step may also include for example, besides the thermoplastic resin and the high melting point fluorescent whitener, a white pigment.

A heating temperature in the kneading step is preferably lower than the melting point of the high melting point fluorescent whitener, and when the fusing point of the thermoplastic resin and the melting point of the high melting point fluorescent whitener are represented by T1 [°C] and T2 [°C], respectively, the heating temperature described above is preferably (T1+10)°C to (T2-10)°C, more preferably (T1+20)°C to (T2-20)°C, and further preferably (T1+30)°C to (T2-30)°C.

The kneaded material obtained in the kneading step may be formed into pellets having sizes in a predetermined range by pelletizing.

The pulverizing step may be performed using a hammer mill, a jet mill, or the like. The pulverizing step may also be performed in a stepwise manner.

A pulverized material obtained in the pulverizing step may be processed, for example, by a classification treatment. That is, after the pulverizing step, a classification step may also be performed.

In addition, when the binding material of the present disclosure contains an aggregation suppressor, by performing an aggregation suppressor mixing step to mix the pulverized material obtained through the pulverizing step and the aggregation suppressor, the aggregation suppressor can be preferably adhered to surfaces of particles forming the pulverized material.

### 3. Method for Manufacturing Molded Body

Next, a method for manufacturing a molded body according to the present disclosure will be described.

The method for manufacturing a molded body according to the present disclosure includes a mixing step of mixing the binding material of the present disclosure and fibers in a vapor phase to obtain a mixture and a molding step of pressuring and heating the mixture to obtain a molded body.

Accordingly, a method which is able to preferably manufacture a molded body having a high whiteness degree by a dry method can be provided. In addition, even when a heating temperature in molding of the molded body is relatively high, since the whiteness degree of the molded body to be obtained can be effectively prevented from being degraded, the resin can be sufficiently melted and softened, the strength of the molded body to be obtained can be made sufficiently excellent, and in addition, the shape, surface conditions, and the like of the molded body can be preferably controlled.

### 3-1. Mixing Step

In the mixing step, the binding material of the present disclosure and the fibers are mixed together in a vapor phase to obtain the mixture.

### 3-1-1. Fibers

As the fibers, for example, there may be mentioned synthetic resin fibers, such as polyolefin fibers of a polyethylene, a polypropylene, or the like, polyester fibers, or polyamide fibers: or natural resin fibers, such as cellulose fibers, keratin fibers, or fibroin fibers. Among those mentioned above, one type of fibers mentioned above may be used alone, or at least two types thereof may be used in combination, and in particular, cellulose fibers are preferable.

Since being a regenerable natural material and being available at an inexpensive price among various types of fibers, the cellulose fibers have advantages in terms of reduction in production cost of the molded body, stable production thereof, reduction in environmental load, and the like. In addition, among the various types of fibers, since having a particularly high theoretical strength, the cellulose fibers are also advantageous in terms of improvement in strength of the molded body.

In addition, in this specification, as the cellulose fibers, a fibrous compound containing a cellulose as a primary component may be used, and besides the cellulose, a hemicellulose and/or a lignin may also be contained.

Incidentally, a content of the lignin in the cellulose fibers is preferably 5.0 percent by mass or less, more preferably 3.0 percent by mass or less, and further preferably 1.0 percent by mass or less.

In addition, a content of the cellulose in the cellulose fibers is preferably 50.0 percent by mass or more, more preferably 60.0 percent by mass or more, and further preferably 80.0 percent by mass or more.

In addition, as the cellulose fibers, fibers processed by a treatment, such as bleaching, may also be used. In addition, the cellulose fibers may also be fibers processed by a treatment, such as an UV radiation treatment, an ozone treatment, or a plasma treatment.

As the cellulose fibers, for example, there may be used paper-making wood pulp, such as chemical pulp or mechanical pulp, prepared from a needle-leaved wood and/or a broad-leaved wood, old paper pulp, linters, or non-wood plant fibers prepared, for example, from hemp, cotton, and/or kenaf.

Although an average length of the fibers is not particularly limited, as a length-lengthweighted average fiber length, the average length is preferably 10 µm to 50 mm, more preferably 20 µm to 5.0 mm, and further preferably 30 µm to 3.0 mm.

Accordingly, for example, the strength of the molded body to be manufactured can be made more excellent.

An average thickness of the fibers is preferably 1.0 to 1,000 µm and more preferably 2.0 to 100.0 µm.

Accordingly, for example, the strength of the molded body to be manufactured can be made more excellent. In addition, unfavorable irregularities can be more effectively prevented from being generated on the surface of the molded body to be manufactured.

In addition, when a cross-section of the fiber is not circular, a circle having the same area as that of the cross-section described above is assumed, and the diameter of the circle thus assumed is used as the thickness of the fiber.

Although an average aspect ratio of the fibers, that is, a ratio of an average length to an average thickness, is not particularly limited, the average aspect ratio is preferably 10 to 1,000 and more preferably 15 to 500.

Accordingly, for example, the strength of the molded body to be manufactured can be made more excellent. In addition, unfavorable irregularities can be more effectively prevented from being generated on the surface of the molded body to be manufactured.

In this specification, the fiber indicates either one independent fiber or an aggregate including a plurality of fibers. In addition, the fibers may be fibers disentangled into fibers by a defibration treatment performed on an object to be defibrated, that is, may be a defibrated material. In this case, as the object to be defibrated, for example, there may be mentioned a material, such as a pulp sheet, paper, old paper, tissue paper, kitchen paper, a cleaner, a filter, a liquid absorber, an acoustic absorber, a buffer material, a mat, or cardboard, in each of which fibers are entangled with or bound to each other.

In addition, in this step, at least two types of fibers may also be used. For example, in accordance with portions of the molded body to be manufactured, fibers having different conditions may also be used.

### 3-1-2. Binding Material

In this step, the binding material of the present disclosure described above is mixed with the fibers.

In this step, the binding material of the present disclosure to be mixed with the fibers preferably satisfies the conditions described above.

In addition, in this step, at least two types of binding materials may also be used. For example, in accordance with the portions of the molded body to be manufactured, binding materials of the present disclosure which have different conditions may also be used.

A content of the binding material to be used in this step with respect to 100 parts by mass of the fibers is preferably 0.1 to 40.0 parts by mass, more preferably 1.0 to 35.0 parts by mass, and further preferably 2.0 to 30.0 parts by mass.

Accordingly, the whiteness degree and the strength of the molded body to be manufactured can be simultaneously obtained at a higher level.

### 3-1-3. Other Composition(s)

In this step, although the binding material of the present disclosure and the fibers are mixed together, at least one composition other than those described above may also be mixed therewith. Hereinafter, in this section, the composition as described above is also called "other composition(s)" in some cases.

In addition, a use amount of the other composition(s) with respect to 100 parts by mass of the fibers is preferably 10.0 parts by mass or less, more preferably 3.0 parts by mass or less, and further preferably 1.0 part by mass or less.

### 3-1-4. Mixing Conditions

In this step, although at least the binding material of the present disclosure and the fibers may be mixed together in a vapor phase to obtain a mixture, the mixing is preferably performed so as to satisfy the following conditions.

That is, the binding material of the present disclosure and fibers in a defibrated state are preferably mixed with each other.

Accordingly, the binding material and the fibers can be more uniformly mixed with each other, and for example, an unfavorable composition variation in the molded body to be manufactured can be more effectively suppressed. As a result, the strength, the reliability, and the like of the molded body can be made more excellent.

In addition, although the mixing of the binding material of the present disclosure and the fibers in this step may be performed in a vapor phase, the mixing described above is preferably performed in air.

In addition, this step may also be performed either in a reduced-pressure atmosphere or in an atmosphere in which at least part of air is replaced with a gas, such as nitrogen.

In addition, in this step, the mixing of the binding material of the present disclosure and the fibers is preferably performed in a stream generated by a blower or the like.

Accordingly, the binding material and the fibers can be more uniformly mixed with each other, and for example, the unfavorable composition variation in the molded body to be manufactured can be more effectively suppressed. As a result, the strength, the reliability, and the like of the molded body can be made more excellent.

In addition, in this step, although a predetermined amount of the binding material of the present disclosure and a predetermined amount of the fibers may be supplied and then mixed with each other, at least one of those described above may be supplied at a plurality of timings.

In addition, when the other composition(s) is used in this step, although a predetermined amount of the other composition(s) may be supplied together with a predetermined amount of the binding material of the present disclosure and a predetermined amount of the fibers and then mixed therewith, the other composition(s) may be supplied at a plurality of timings.

This step is preferably performed at a relatively low temperature.

In more particular, the maximum temperature in a vapor phase in this step is preferably 80°C or less, more preferably 70°C or less, and further preferably 50°C or less.

Accordingly, for example, the thermoplastic resin forming the binding material can be more effectively prevented from being unfavorably localized in the mixture thus obtained, and the strength, the reliability, and the like of the molded body to be manufactured can be made more excellent.

In addition, when the fusing point of the thermoplastic resin is represented by T1 [°C], the maximum temperature in a vapor phase in this step is preferably (T1-20)°C or less, more preferably (T1-30)°C or less, and further preferably (T1-50)°C or less.

Accordingly, for example, the thermoplastic resin forming the binding material can be more effectively prevented from being unfavorably localized in the mixture thus obtained, and the strength, the reliability, and the like of the molded body to be manufactured can be made more excellent.

### 3-2. Molding Step

In the molding step, the mixture obtained in the mixing step is pressurized and heated to obtain the molded body.

This step may be performed, for example, by a heat press, a heat roller machine, or a three-dimensional machining device.

A heating temperature in this step is preferably a temperature equal to or higher than the fusing point of the thermoplastic resin and a temperature equal to or lower than the melting point of the high melting point fluorescent whitener.

Accordingly, the whiteness degree, the strength, the reliability, and the like of the molded body to be manufactured can be made more excellent. In addition, a time required for the molding step can be shortened, and hence, the productivity of the molded body can be made more excellent.

In particular, when the fusing point of the thermoplastic resin and the melting point of the high melting point fluorescent whitener are represented by T1 [°C] and T2 [°C], respectively, the heating temperature in this step is preferably (T1+10)°C to (T2-10)°C, more preferably (T1+20)°C to (T2-20)°C, and further preferably (T1+30)°C to (T2-30)°C.

Accordingly, the effects described above can be more significantly obtained. In addition, even when a treatment time in the molding step is relatively shortened, the strength, the reliability, and the like of the molded body to be manufactured can be made sufficiently excellent, and in addition, the productivity of the molded body can be made more excellent.

A particular heating temperature in this step is preferably 170°C or more, more preferably 175°C to 220°C, and further preferably 180°C to 200°C.

Accordingly, the whiteness degree, the strength, the reliability, and the like of the molded body to be manufactured can be made more excellent. In addition, the time required for the molding step can be further shortened, and hence, the productivity of the molded body can be made more excellent.

Although a pressure at which the mixture is molded in this step is not particularly limited, the pressure described above is preferably 0.5 to 8.0 MPa, more preferably 0.8 to 6.0 MPa, and further preferably 1.0 to 5.0 MPa.

Accordingly, while the strength, the reliability, and the like of the molded body to be obtained can be made sufficiently excellent, the productivity of the molded body can be made more excellent.

In addition, a heating and pressurizing time in this step is preferably 0.5 to 300.0 seconds, more preferably 1.0 to 60.0 seconds, and further preferably 1.5 to 45.0 seconds.

Accordingly, while the strength, the reliability, and the like of the molded body to be obtained can be made sufficiently excellent, the productivity of the molded body can be made more excellent. In addition, energy saving can also be preferably performed.

### 3-3. Other Step(s)

The method for manufacturing a molded body may further include, besides the steps described above, at least one another step (other step(s)). As the other step(s) described above, for example, a cutting step of cutting the molded body thus manufactured into an appropriate size and/or an appropriate shape may be mentioned.

### 4. Molded Body

Next, a molded body according to the present disclosure will be described.

The molded body according to the present disclosure is a molded body manufactured using the binding material of the present disclosure.

The molded body according to the present disclosure at least includes fibers, a thermoplastic resin, and a high melting point fluorescent whitener.

A content of the fibers in the molded body is preferably 70.0 to 99.9 percent by mass, more preferably 74.0 to 99.0 percent by mass, and further preferably 76.0 to 98.0 percent by mass.

Accordingly, the whiteness degree and the strength of the molded body can be simultaneously obtained at a higher level.

A content of the thermoplastic resin in the molded body is preferably 0.08 to 29.4 percent by mass, more preferably 0.8 to 24.5 percent by mass, and further preferably 1.7 to 22.0 percent by mass.

Accordingly, while the whiteness degree of the molded body is made sufficiently excellent, the strength of the molded body can be made more excellent.

A content of the high melting point fluorescent whitener in the molded body is preferably 0.00001 to 0.3 percent by mass, more preferably 0.0001 to 0.2 percent by mass, and further preferably 0.006 to 0.12 percent by mass.

Accordingly, concentration quenching and a color tone of the high melting point fluorescent whitener itself are effectively prevented from imparting an adverse influence on the whiteness degree of the molded body, and the whiteness degree of the molded body can be made more excellent.

In addition, when the molded body includes a white pigment, a content of the white pigment in the molded body is preferably 0.001 to 6.0 percent by mass, more preferably 0.03 to 4.5 percent by mass, and further preferably 0.1 to 3.5 percent by mass.

Accordingly, while the whiteness degree of the molded body is made more excellent, the strength of the molded body can be made more excellent.

Although the shape and the size of the molded body according to the present disclosure are not particularly limited, when the molded body has a sheet shape, the thickness thereof is preferably 0.01 to 3 mm and more preferably 0.05 to 1 mm.

### 5. Manufacturing Apparatus of Molded Body

Next, a manufacturing apparatus capable of manufacturing a molded body of the present disclosure will be described.

FIGURE is a schematic view showing one example of a manufacturing apparatus capable of manufacturing a sheet-shaped molded body.

As shown in FIGURE, a manufacturing apparatus 100 includes a supply portion 10, a coarsely pulverizing portion 12, a defibrating portion 20, a sorting portion 40, a first web forming portion 45, a rotation body 49, a mixing portion 50, a depositing portion 60, a second web forming portion 70, a molded body forming portion 80, a cutting portion 90, and a humidifying portion 78.

The supply portion 10 supplies a raw material to the coarsely pulverizing portion 12. The supply portion 10 is, for example, an automatic feeder which continuously feeds the raw material to the coarsely pulverizing portion 12. As the raw material to be supplied to the coarsely pulverizing portion 12, although a material containing fibers may be used, a material, such as old paper, containing cellulose fibers can be preferably used. Hereinafter, the case in which the raw material to be supplied to the coarsely pulverizing portion 12 is a material containing cellulose fibers will be primarily described.

The coarsely pulverizing portion 12 cuts the raw material supplied by the supply portion 10 into small pieces in a gas atmosphere, such as in the air. The small pieces each have, for example, a several centimeters square shape. In the example shown in the drawing, the coarsely pulverizing portion 12 includes at least one coarsely pulverizing blade 14, and by this coarsely pulverizing blade 14, the raw material thus supplied can be cut into small pieces. As the coarsely pulverizing portion 12, for example, a shredder may be used. After being received by a hopper 1, the raw material cut by the coarsely pulverizing portion 12 is transported to the defibrating portion 20 through a tube 2.

The defibrating portion 20 defibrates the raw material cut in the coarsely pulverizing portion 12. In this case, the "defibrate" indicates that a raw material composed of fibers bound to each other, that is, a material to be defibrated, is disentangled into separately independent fibers. The defibrating portion 20 may also have a function to separate substances, such as resin particles, an ink, a toner, a filler, and a blurring inhibitor, each of which is adhered to the raw material, from the fibers.

A material passing through the defibrating portion 20 is called a "defibrated material". In the "defibrated material", besides the disentangled fibers, resin particles, coloring materials, such as an ink, a toner, and a filler, and additives, such as a blurring inhibitor and a paper reinforcing agent, which are separated from the fibers when the fibers are disentangled, may also be contained in some cases. As the resin particles separated from the fibers, for example, particles containing a resin to bind fibers to each other may be mentioned.

In the defibrating portion 20, the defibration is performed by a dry method. A treatment, such as defibration, which is not performed by a wet method in which a slurry state is formed in a liquid such as water, but which is performed in a gas atmosphere such as in the air is called a dry method. As the defibrating portion 20, in this embodiment, an impellor mill is used. The defibrating portion 20 has a function to generate an air stream which sucks the raw material and discharges the defibrated material. Accordingly, the defibrating portion 20 sucks the raw material from an inlet port 22 together with the air stream generated thereby, then performs a defibrating treatment, and subsequently transports the defibrated material to a discharge port 24. The defibrated material passing through the defibrating portion 20 is transferred to the sorting portion 40 through a tube 3. In addition, as an air stream transporting the defibrated material from the defibrating portion 20 to the sorting portion 40, the air stream generated by the defibrating portion 20 may also be used, or an air stream generating device, such as a blower, may be provided so as to use an air stream generated thereby.

The defibrated material defibrated in the defibrating portion 20 flows into the sorting portion 40 through an inlet port 42 and is sorted in accordance with the length of the fibers. The sorting portion 40 includes a drum section 41 and a housing section 43 receiving the drum section 41. As the drum section 41, for example, a sieve is used. The drum section 41 includes a net, and fibers and/or particles which pass through the net, that is, a first sorted material smaller than each of the openings of the net, can be separated from fibers, nondefibrated pieces, and/or damas which are not allowed to pass through the net, that is, a second sorted material larger than each of the openings of the net. For example, the first sorted material is transported to the mixing portion 50 through a tube 7. The second sorted material is returned to the defibrating portion 20 from a discharge port 44 through a tube 8. In particular, the drum section 41 is a cylindrical sieve which is rotatably driven by a motor. As the net of the drum section 41, for example, there may be used a metal net, an expanded metal obtained by expanding a metal plate having cut lines, or a punched metal obtained by forming holes in a metal plate using a press machine or the like.

The first web forming portion 45 transports the first sorted material passing through the sorting portion 40 to the mixing portion 50. The first web forming portion 45 includes a mesh belt 46, tension rollers 47, and a suction section 48.

The suction section 48 is able to suck the first sorted material, which passes through the openings of the sorting portion 40, that is, through the openings of the net, and which is dispersed in air, on the mesh belt 46. The first sorted material is deposited on the moving mesh belt 46 to form a web V. The basic structures of the mesh belt 46, the tension rollers 47, and the suction section 48 are similar to those of a mesh belt 72, tension rollers 74, and a suction mechanism 76 of the second web forming portion 70, respectively, which will be described later.

Since passing through the sorting portion 40 and the first web forming portion 45, the web V is formed in a softly expanded air-rich state. The web V deposited on the mesh belt 46 is charged to the tube 7 and then transported to the mixing portion 50.

The rotation body 49 is able to cut the web V before the web V is transported to the mixing portion 50. In the example shown in the drawing, the rotation body 49 includes a base portion 49a and projecting portions 49b projecting from the base portion 49a. The projecting portion 49b has, for example, a plate shape. In the example shown in the drawing, the four projecting portions 49b are provided at regular angular intervals. As the base portion 49a is rotated in a direction R, the projecting portions 49b are able to rotate around the base portion 49a. Since the web V is cut by the rotation body 49, for example, the variation of the amount of the defibrated material per unit time supplied to the depositing portion 60 can be reduced.

The rotation body 49 is provided in the vicinity of the first web forming portion 45. In the example shown in the drawing, the rotation body 49 is provided in the vicinity of a tension roller 47a located downstream of the path for the web V, that is, is provided adjacent to the tension roller 47a. The rotation body 49 is provided at a position at which the projecting portion 49b is able to be in contact with the web V and is not able to be in contact with the mesh belt 46 on which the web V is deposited. The minimum distance between the projecting portion 49b and the mesh belt 46 is, for example, 0.05 to 0.5 mm.

The mixing portion 50 mixes the first sorted material passing through the sorting portion 40, in other words, the first sorted material containing the fibers and transported by the first web forming portion 45, and the binding material of the present disclosure. The mixing portion 50 includes a binding material supply section 52 supplying the binding material of the present disclosure, a tube 54 transporting the first sorted material and the binding material of the present disclosure, and a blower 56. In the example shown in the drawing, the binding material of the present disclosure is supplied to the tube 54 from the binding material supply section 52 through a hopper 9. The tube 54 is extended from the tube 7.

In the mixing portion 50, an air stream is generated by the blower 56, and the first sorted material and the binding material of the present disclosure can be transported in the tube 54 while being mixed together. In addition, a mechanism of mixing the first sorted material and the binding material of the present disclosure is not particularly limited, and the mixing may be performed by stirring using at least one high speed rotating blade or using a rotational container, such as a V-shaped mixer.

As the binding material supply section 52, for example, a screw feeder as shown in FIGURE or a disc feeder now shown may be used. When the binding material of the present disclosure is supplied from the binding material supply section 52, the fibers are not yet bound together. The thermoplastic resin included in the binding material of the present disclosure is partially melted when passing through the molded body forming portion 80, so that fibers in a surface region of a molded body WS are bound together.

A mixture passing through the mixing portion 50, that is, a molded body manufacturing composition which is a mixture of the first sorted material and the binding material of the present disclosure, is transported to the depositing portion 60 through the tube 54.

In the depositing portion 60, the mixture passing through the mixing portion 50 is introduced from an inlet port 62, and a defibrated material of entangled fibers is disentangled and is allowed to fall down while being dispersed in air. Accordingly, in the depositing portion 60, the mixture can be uniformly deposited on the second web forming portion 70.

The depositing portion 60 includes a drum section 61 and a housing section 63 receiving the drum section 61. As the drum section 61, a rotatable cylindrical sieve is used. The drum section 61 includes a net and allows fibers and/or particles which are contained in the mixture passing through the mixing portion 50 and which are smaller than each of the openings of the net to fall down. The structure of the drum section 61 is, for example, the same as that of the drum section 41.

In addition, the "sieve" of the drum section 61 may have no function to sort a specific object. That is, the "sieve" used as the drum section 61 indicates a section including a net, and the drum section 61 may allow all the mixture introduced in the drum section 61 to fall down.

The second web forming portion 70 deposits a material passing through the depositing portion 60 to form a web W which is a deposit to be formed into the molded body WS. The second web forming portion 70 includes, for example, the mesh belt 72, the tension rollers 74, and the suction mechanism 76.

While the mesh belt 72 moves, a material passing through the openings of the depositing portion 60, that is, through the openings of the net, is deposited. The mesh belt 72 is suspended by the tension rollers 74 and is configured to allow air to pass but not to allow the material thus deposited to easily pass. The mesh belt 72 moves as the tension rollers 74 rotate. While the mesh belt 72 continuously moves, since the material passing through the depositing portion 60 continuously falls and deposits, the web W is formed on the mesh belt 72. The mesh belt 72 is composed of, for example, a metal, a resin, a cloth, or a non-woven cloth.

The suction mechanism 76 is provided under the mesh belt 72, that is, is provided opposite to a depositing portion 60 side. The suction mechanism 76 can generate a downward air stream, that is, an air stream running from the depositing portion 60 to the mesh belt 72. By this suction mechanism 76, the mixture dispersed in air by the depositing portion 60 can be sucked on the mesh belt 72. Accordingly, a discharge rate from the depositing portion 60 can be increased. Furthermore, by the suction mechanism 76, a downflow can be formed in a falling path of the mixture, and the defibrated material and the binding material of the present disclosure are suppressed from being entangled together during the falling.

As described above, by the web forming step performed in the depositing portion 60 and the second web forming portion 70, the web W is formed in a softly expanded air-rich state. The web W deposited on the mesh belt 72 is transported to the molded body forming portion 80.

The molded body forming portion 80 heats the web W deposited on the mesh belt 72 to form the molded body WS. In the molded body forming portion 80, the web W, which is the deposit of the mixture of the defibrated material and the binding material of the present disclosure mixed in the second web forming portion 70, is heated, so that the thermoplastic resin is softened and melted. As a result, the fibers are bound to each other.

The molded body forming portion 80 includes a heating section 84 heating the web W. As the heating section 84, for example, a heat press or heating rollers may be used, and hereinafter, an example of using the heating rollers will be described. The number of heating rollers of the heating section 84 is not particularly limited. In the example shown in the drawing, the heating section 84 includes a pair of heating rollers 86. Since the heating section 84 is formed using the heating rollers 86, while the web W is continuously transported, the molded body WS can be formed.

The heating rollers 86 are disposed such that, for example, the rotation shafts thereof are in parallel to each other. The roller radius of the heating roller 86 is, for example, preferably 2.0 to 5.0 cm, more preferably 2.5 to 4.0 cm, and further preferably 2.5 to 3.5 cm.

While being brought into contact with the heating rollers 86 and sandwiched therebetween, the web W is transported and heated by the heating rollers 86.

A rotation rate of the heating roller 86 is, for example, preferably 20 to 500 rpm, more preferably 30 to 350 rpm, and further preferably 50 to 300 rpm.

Accordingly, the surface region of the web W can be sufficiently and more accurately heated.

The heating rollers 86 sandwich and transport the web W to form a molded body WS having a predetermined thickness. In this step, the pressure applied to the web W by the heating rollers 86 is preferably 0.5 to 8.0 MPa, more preferably 0.8 to 6.0 MPa, and further preferably 1.0 to 5.0 MPa.

When the web W is heated, a surface temperature of the heating roller 86 is preferably 170°C or more, more preferably 175°C to 220°C, and further preferably 180°C to 200°C.

The manufacturing apparatus 100 of this embodiment may further include the cutting portion 90, if needed. In the example shown in the drawing, the cutting portion 90 is provided downstream of the heating section 84. The cutting portion 90 cuts the molded body WS formed by the molded body forming portion 80. In the example shown in the drawing, the cutting portion 90 includes a first cutting section 92 which cuts the molded body WS in a direction intersecting the transport direction of the molded body WS and a second cutting section 94 which cuts the molded body WS in a direction parallel to the transport direction. The second cutting section 94 cuts, for example, the molded body WS which passes through the first cutting section 92.

In addition, the manufacturing apparatus 100 of this embodiment may further include the humidifying portion 78. In the example shown in the drawing, the humidifying portion 78 is provided downstream of the cutting portion 90 and upstream of a discharge portion 96. The humidifying portion 78 can supply water or vapor to the molded body WS. As a concrete mode of the humidifying portion 78, for example, there may be mentioned a mode in which mist of water or an aqueous solution is sprayed, a mode in which water or an aqueous solution is sprayed, or a mode in which water or an aqueous solution is ejected from an ink jet head so as to be adhered to the molded body.

Since the manufacturing apparatus 100 includes the humidifying portion 78, the molded body WS thus formed may contain moisture. Accordingly, the fibers are wetted and softened. Hence, for example, when a three-dimensional container is formed using the molded body WS, wrinkles and breakages are more unlikely to be generated. In addition, since the molded body WS contains moisture, when the fibers are cellulose fibers, hydrogen bonds are likely to be formed therebetween; hence, the density of the molded body WS is increased, and for example, the strength thereof can be improved.

In the example shown in FIGURE, although the humidifying portion 78 is provided downstream of the cutting portion 90, as long as the humidifying portion 78 is provided downstream of the heating section 84, the same effects as described above can be obtained. That is, the humidifying portion 78 may also be provided downstream of the heating section 84 and upstream of the cutting portion 90.

According to the manufacturing apparatus as described above, the method for manufacturing a molded body according to the present disclosure can be preferably performed.

Heretofore, although preferable embodiments of the present disclosure have been described, the present disclosure is not limited thereto.

For example, the present disclosure includes substantially the same structure as the structure described in the embodiment. That is, the substantially the same structure includes, for example, the structure in which the function, the method, and the result are the same as those described above, or the structure in which the object and the effect are the same as those described above. In addition, the present disclosure includes the structure in which a nonessential portion of the structure described in the embodiment is replaced with something else. In addition, the present disclosure includes the structure which performs the same operational effect as that of the structure described in the embodiment or the structure which is able to achieve the same object as that of the structure described in the embodiment. In addition, the present disclosure includes the structure in which a known technique is added to the structure described in the embodiment.

In addition, the method for manufacturing a molded body according to the present disclosure is not limited to a method to be carried out by the apparatus described above and may be carried out by any apparatus.

### Examples

Next, concrete examples of the present disclosure will be described.

### 6. Manufacturing of Binding Material

A binding material was manufactured as described below.

### Example 1

First, 89.9 parts by mass of a polyester resin (Vylon 220, fusing point: 101°C, manufactured by Toyobo Co., Ltd.) as a thermoplastic resin, 10.0 parts by mass of calcium carbonate (Hakuenka CC, manufactured by Shiraishi Kogyo Kaisha, Ltd.) as a white pigment, and 0.1 parts by mass of 1,4-bis(2-benzoxazolyl)naphthalene (melting point: 212°C, manufactured by Tokyo Chemical Industry Co., Ltd.) as a fluorescent whitener were treated by a high speed mixer (FM type mixer FM-10C, manufactured by NIPPON COKE & ENGINEERING CO., LTD.), so that a resin pigment mixture was obtained. In addition, a T1/2 temperature which was the fusing point of the thermoplastic resin was obtained by measurement using an elevated flow tester (CFT 500 type, manufactured by Shimadzu Corporation) under conditions at a load of 20 kg/cm², a temperature-rise rate of 5.0°C/min, a die diameter of 1.0 mm, and a die length of 1.0 mm.

This resin pigment mixture was supplied to a twin-screw kneading extruder (TEM-26SS, manufactured by Toshiba Machinery Co., Ltd.) through a hopper for melting and kneading, so that pellets each having a length of approximately 3 mm were obtained.

The pellets described above were pulverized into particles each having a diameter of 1 mm or less by a hammer mill (Lab Mil LM-5, manufactured by Dalton Corporation), and the particles thus pulverized were then further pulverized by a jet mil (PJM-80SP, manufactured by Nippon Pneumatic Mfg. Co., Ltd.), so that particles having a maximum particle diameter of 40 µm or less were obtained. Those particles were classified by an air classifier (MDS-3, manufactured by Nippon Pneumatic Mfg. Co., Ltd.), so that aggregates of colored resin particles having a volume average particle diameter of 10.0 µm were obtained.

After 100.0 parts by mass of the colored resin particles and 1.0 part by mass of fumed silica (AEROSIL R972, manufactured by Nippon Aerosil Co., Ltd.) as an aggregation suppressor were charged in a blender (Waring Blender 7012 type, manufactured by Waring) and were then mixed together at a rotation rate of 15,600 rpm for 60 seconds, so that a binding material of Example 1 was obtained.

When the binding material thus obtained was partially sampled in a glass container and was then left at room temperature for 24 hours, aggregate formation of the colored resin particles was not observed, and a fluidizing powder state was maintained. Accordingly, it was confirmed that since the aggregation suppressor was coated on surfaces of the colored resin particles, a non-aggregated state was maintained.

### Example 2

Except for that as the thermoplastic resin, a styrene-acrylic-based resin (FSR-068, fusing point: 130°C, manufactured by Fujikura Kasei Co., Ltd.) was used, a binding material was manufactured in a manner similar to that of Example 1.

### Example 3

Except for that as the fluorescent whitener, 4,4'-bis(2-benzoxazolyl)stilbene (melting point: 355°C, manufactured by Tokyo Chemical Industry Co., Ltd.) was used, a binding material was manufactured in a manner similar to that of Example 1.

### Example 4

Except for that as the white pigment, titanium oxide was used, a binding material was manufactured in a manner similar to that of Example 3.

### Example 5

Except for that when the resin pigment mixture was prepared, the amount of the thermoplastic resin, the amount of the white pigment, and the amount of the fluorescent whitener were set to 89.0 parts by mass, 10.0 parts by mass, and 1.0 part by mass, respectively, a binding material was manufactured in a manner similar to that of Example 3.

### Example 6

Except for that when the resin pigment mixture was prepared, the amount of the thermoplastic resin, the amount of the white pigment, and the amount of the fluorescent whitener were set to 88.0 parts by mass, 10.0 parts by mass, and 2.0 parts by mass, respectively, a binding material was manufactured in a manner similar to that of Example 3.

### Example 7

Except for that when the resin pigment mixture was prepared, the amount of the thermoplastic resin, the amount of the white pigment, and the amount of the fluorescent whitener were set to 79.9 parts by mass, 20.0 parts by mass, and 0.1 parts by mass, respectively, a binding material was manufactured in a manner similar to that of Example 3.

### Example 8

Except for that when the resin pigment mixture was prepared, the amount of the thermoplastic resin, the amount of the white pigment, and the amount of the fluorescent whitener were set to 69.9 parts by mass, 30.0 parts by mass, and 0.1 parts by mass, respectively, a binding material was manufactured in a manner similar to that of Example 3. Comparative Example 1

Except for that instead of using the resin pigment mixture which was the mixture of the thermoplastic resin, the white pigment, and the fluorescent whitener, the thermoplastic resin was only used, a binding material was manufactured in a manner similar to that of Example 1.

### Comparative Example 2

Except for that instead of using the resin pigment mixture which was the mixture of the thermoplastic resin, the white pigment, and the fluorescent whitener, a mixture containing 90.0 parts by mass of the thermoplastic resin and 10.0 parts by mass of the white pigment was used, a binding material was manufactured in a manner similar to that of Example 1. That is, the binding material of this Comparative Example contained no fluorescent whitener. Comparative Example 3

Except for that as the fluorescent whitener, 7-diethylamino-4-methylcoumarin (melting point: 74°C, manufactured by Tokyo Chemical Industry Co., Ltd.) was used, a binding material was manufactured in a manner similar to that of Example 3.

### 7. Manufacturing of Molded Body

A sheet-shaped molded body was manufactured as described below using the binding material of Example 1.

First, as a fiber source of a molded body to be manufactured, printed old paper obtained by printing a monochrome pattern on commercially available copy paper at a coverage rate of 10% by an ink jet printer (PX-M7050, manufactured by Seiko Epson Corporation) was defibrated by a high-speed mill to prepare defibrated fibers. An average thickness of the defibrated fibers measured by a fiber tester (Fiber Tester, manufactured by Lorenzen & Wettre) was 20.0 µm.

After 80.0 parts by mass of the defibrated fibers and 20.0 parts by mass of the binding material of Example 1 were charged in a blender (Waring Blender 7012 type, manufactured by Waring), mixing was performed at a rotation rate of 3,100 rpm for 7 seconds, so that a mixture of the fibers and the binding material was obtained.

The mixture thus obtained was charged on a 200-mm diameter sieve having openings of 0.6 mm in diameter and then deposited on a fluorine-resin coated aluminum disc (Sumiflon Coated Aluminum, manufactured by Sumitomo Electric Fine Polymer Inc.) having a diameter of 250 mm (plate thickness: 1 mm) using an electric sieve shaker (AS-200, manufactured by Retsch). Another fluorine-resin coated aluminum disc having the same diameter as described above was placed on the mixture thus deposited and was then pressed by a press machine so that a pressure applied to the sheet was 1.0 MPa.

The pressurized mixture sandwiched between the aluminum discs was set in a heating press machine and was then heated at 180°C for 2.0 seconds. Subsequently, the pressure was released, and the mixture was cooled to ordinary temperature while being left at room temperature. Next, the mixture was peeled away from the aluminum disc, so that a sheet-shaped molded body was obtained. The thickness of the sheet was 130 µm.

Except for that instead of using the binding material of Example 1, the binding materials of Examples 2 to 8 and Comparative Examples 1 to 3 were used, sheet-shaped molded bodies were each formed in a manner similar to that described above.

### 8. Evaluation

The following evaluations were performed on the sheet-shaped molded bodies of Examples and Comparative Examples obtained as described above.

### 8-1. Whiteness Degree

By using a PF7000 manufactured by Nippon Denshoku Industries Co., Ltd., an ISO whiteness degree of the sheet-shaped molded body of each of Examples and Comparative Examples was measured. Based on the measurement results, the whiteness degree of the molded body of Comparative Example 1 was assumed as 1, and a relative value of the whiteness degree of each molded body was obtained and then evaluated in accordance with the following criteria. As the relative value thereof is higher, the whiteness degree is higher and preferable.
A: Value relative to whiteness degree of Comparative Example 1 is more than 1.10.
B: Value relative to whiteness degree of Comparative Example 1 is more than 1.05 to 1.10.
C: Value relative to whiteness degree of Comparative Example 1 is more than 1.00 to 1.05.
D: Value relative to whiteness degree of Comparative Example 1 is 1.00 or less.

### 8-2. Tensile Strength

A tensile test was performed on the sheet-shaped molded body of each of Examples and Comparative Examples in accordance with JIS P 8113. In more particular, after a test piece having a total length of 180 mm was cut off from each molded body and was then set in a tensile tester (AGS-X, manufactured by Shimadzu Corporation), a tensile test was performed at an elongation rate of 20 mm/min. A rupture stress of the test piece was calculated from the maximum load obtained until the test piece was ruptured and was regarded as the tensile strength. The tensile test was performed in accordance with JIS P 8111 in an environment at a room temperature of 23°C and a humidity of 50%.

Based on those measurement results, the tensile strength of the molded body of Comparative Example 1 was assumed as 1, and a relative value of the tensile strength of each molded body was obtained and then evaluated in accordance with the following criteria. As this relative value is higher, the tensile strength is higher and preferable.
A: Value relative to tensile strength of Comparative Example 1 is more than 0.9.
B: Value relative to tensile strength of Comparative Example 1 is more than 0.8 to 0.9.
C: Value relative to tensile strength of Comparative Example 1 is 0.8 or less.

Those results are shown in Table 1 together with the structure of the binding material of each of Examples and Comparative Examples.

**Table 1**

| | STRUCTURE OF BINDING MATERIAL | | | | | | | | | | EVALUATION | |
|---|---|---|---|---|---|---|---|---|---|---|---|---|
| | THERMOPLASTIC RESIN | | | FLUORESCENT WHITENER | | | WHITE PIGMENT | | AGGREGATION SUPPRESSOR | | WHITENESS DEGREE | TENSILE STRENGTH |
| | TYPE | FUSING POINT [°C] | CONTENT [PARTS BY MASS] | MATERIAL NAME | MELTING POINT [°C] | CONTENT [PARTS BY MASS] | MATERIAL NAME | CONTENT [PARTS BY MASS] | MATERIAL NAME | CONTENT [PARTS BY MASS] | | |
| EXAMPLE 1 | POLYESTER RESIN | 101 | 89.9 | 1,4-BIS(2-BENZOXAZOLYL)NAPHTHALE NE | 212 | 0.1 | CALCIUM CARBONATE | 10.0 | FUMED SILICA | 1.0 | A | A |
| EXAMPLE 2 | STYRENE-ACRYLIC-BASED RESIN | 130 | 89.9 | 1,4-BIS(2-BENZOXAZOLYL)NAPHTHALENE | 212 | 0.1 | CALCIUM CARBONATE | 10.0 | FUMED SILICA | 1.0 | A | A |
| EXAMPLE 3 | POLYESTER RESIN | 101 | 89.9 | 4,4'-BIS(2-BENZOXAZOLYL)STILBENE | 355 | 0.1 | CALCIUM CARBONATE | 10.0 | FUMED SILICA | 1.0 | A | A |
| EXAMPLE 4 | POLYESTER RESIN | 101 | 89.9 | 4,4'-BIS(2-BENZOXAZOLYL)STILBENE | 355 | 0.1 | TITANIUM OXIDE | 10.0 | FUMED SILICA | 1.0 | A | A |
| EXAMPLE 5 | POLYESTER RESIN | 101 | 89.0 | 4,4'-BIS(2-BENZOXAZOLYL)STILBENE | 355 | 1.0 | CALCIUM CARBONATE | 10.0 | FUMED SILICA | 1.0 | A | A |
| EXAMPLE 6 | POLYESTER RESIN | 101 | 88.0 | 4,4'-BIS(2-BENZOXAZOLYL)STILBENE | 355 | 2.0 | CALCIUM CARBONATE | 10.0 | FUMED SILICA | 1.0 | B | A |
| EXAMPLE 7 | POLYESTER RESIN | 101 | 79.9 | 4,4'-BIS(2-BENZOXAZOLYL)STILBE NE | 355 | 0.1 | CALCIUM CARBONATE | 20.0 | FUMED SILICA | 1.0 | A | B |
| EXAMPLE 8 | POLYESTER RESIN | 101 | 69.9 | 4,4'-BIS(2-BENZOXAZOLYL)STILBENE | 355 | 0.1 | CALCIUM CARBONATE | 30.0 | FUMED SILICA | 1.0 | A | C |
| COMPARATIVE EXAMPLE 1 | POLYESTER RESIN | 101 | 100.0 | NONE | - | - | NONE | - | FUMED SILICA | 1.0 | D | A |
| COMPARATIVE EXAMPLE 2 | POLYESTER RESIN | 101 | 90.0 | NONE | - | - | CALCIUM CARBONATE | 10.0 | FUMED SILICA | 1.0 | C | A |
| COMPARATIVE EXAMPLE 3 | POLYESTER RESIN | 101 | 89.9 | 7-DIETHYLAMINO-4-METHYLCOUMARINE | 74 | 0.1 | CALCIUM CARBONATE | 10.0 | FUMED SILICA | 1.0 | C | A |

As apparent from Table 1, although excellent results were obtained in Examples of the present disclosure, in Comparative Examples, satisfactory results could not be obtained.

In addition, when sheet-shaped molded bodies were manufactured from the binding materials of Examples and Comparative Examples using the manufacturing apparatus shown in FIGURE and were then evaluated in a manner similar to that described above, the same results as described above could be obtained.

## Claims

1. A binding material to obtain a molded body by binding fibers to each other, the binding material comprising:
a thermoplastic resin; and
a fluorescent whitener,
wherein the fluorescent whitener has a melting point higher than a fusing point of the thermoplastic resin.

2. The binding material according to claim 1,
wherein the melting point of the fluorescent whitener is 200°C or more.

3. The binding material according to claim 1,
wherein a content of the fluorescent whitener in the binding material is 1.0 percent by mass or less.

4. The binding material according to claim 1,
further comprising a white pigment.

5. The binding material according to claim 4,
wherein the white pigment includes calcium carbonate.

6. The binding material according to claim 4,
wherein a content of the white pigment in the binding material is less than 20.0 percent by mass.

7. A method for manufacturing a molded body, comprising:
a mixing step of mixing the binding material according to claim 1 and fibers in a vapor phase to obtain a mixture; and
a molding step of pressurizing and heating the mixture to obtain the molded body.

8. The method for manufacturing a molded body, according to claim 7,
wherein the molding step has a heating temperature equal to or higher than the fusing point of the thermoplastic resin and equal to or lower than the melting point of the fluorescent whitener.

9. The method for manufacturing a molded body, according to claim 7,
wherein the molding step has a heating temperature of 170°C or more.
